# EUROPÄISCHE PATENTSCHRIFT

(11) **EP 2 474 430 B1**
(45) Veröffentlichungstag und Bekanntmachung des Hinweises auf die Patenterteilung: **13.11.2013**
(21) Anmeldenummer: 12002478.1
(22) Anmeldetag: 14.07.2009
(51) Int. Cl.: B60D 1/06, B60D 1/54

(54) **Anhängekupplung**
Tow bar
Attelage

(30) Priorität: 01.08.2008 DE 102008035987
(43) Veröffentlichungstag der Anmeldung: 11.07.2012
(62) Teilanmeldung aus: 09009142.2
(73) Patentinhaber: WESTFALIA - Automotive GmbH, 33378 Rheda-Wiedenbrück (DE)
(72) Erfinder: Hetfleisch, Raimund, 33129 Delbrück-Boke (DE); Drücker, Michael, 33332 Gütersloh (DE)
(74) Vertreter: Bregenzer, Michael

(56) Entgegenhaltungen:
- EP-A1- 1 288 026
- EP-A1- 1 614 556
- EP-A1- 1 886 847
- DE-B3- 10 252 722

## Beschreibung

Die Erfindung betrifft eine Anhängekupplung mit einem Kupplungsarm zum Ankuppeln eines Anhängers und einem an einem Kraftfahrzeug, insbesondere einem Personenkraftfahrzeug, befestigbaren Halter zum Halten des Kupplungsarms, mit einer Verriegelungseinrichtung, die einen durch eine Federanordnung in eine Verriegelungsstellung federbelasteten Verriegeluhgskörper zum Verriegeln und ortsfesten Festlegen des Kupplungsarms an dem Halter aufweist, gemäß dem Oberbegriff des Anspruchs 1.

Eine derartige Anhängekupplung geht z.B. aus EP 1 614 556 A1 hervor.

Eine weitere Anhängekupplung ist beispielsweise aus EP 1 475 253 A1 bekannt. Ein Halter der Anhängekupplung ist beispielsweise an einem Querträger des Kraftfahrzeuges befestigt. Der Kupplungsarm ist mittels eines Arm-Lagerteils oder eines Schwenkkörpers schwenkbeweglich an dem Halter gelagert. Im Innern eines Schwenklagers dieser Anordnung ist ein Verriegelungskörper einer Verriegelungsanordnung in Gestalt eines Verdrängerkörpers angeordnet, der in der Verriegelungsstellung Kugeln nach radial außen verdrängt, sdie auf das Arm-Lagerteil wirken und dieses in Richtung des kraftfahrzeugseitigen Halters verschieben, so dass Formschluss-Kugeln, die am Halter angeordnet sind, in entsprechende Kugelkalotten des Arm-Lagerteils eingreifen und somit der Kupplungsarm drehfest am Kraftfahrzeug verriegelt ist.

Der Verriegelungskörper beziehungsweise das Verdrängerorgan für die Kugeln ist durch eine Feder in die Verriegelungsstellung belastet. Nun ist es denkbar, dass durch Belastungen im Fahrbetrieb die Kugeln auf das Verdrängerorgan rückwirken und dieses in Richtung der Entriegelungsstellung bewegen. An sich ist dies durch eine entsprechende Schrägneigung von Verdrängerflächen an dem Verriegelungskörper kaum möglich. Dennoch bleibt ein gewisses Restrisiko, dass sich der Verriegelungskörper in Richtung der Entriegelungsstellung entgegen der Federkraft bewegt. Daher ist das Zugorgan, das den Verriegelungskörper betätigt, nicht nur als Zugorgan ausgestaltet, sondern auch auf Druck belastbar und wirkt auf ein Handbedienteil mit einer Sperre. Die Sperre im Handbedienteil verhindert über das druckbelastbare Zugorgan, dass der Verriegelungskörper in seine Entriegelungsstellung verstellbar ist.

Bei dieser Konfiguration muss aber ein druckbelastbares Zugorgan vorgesehen sein. Ferner ist eine zusätzliche Sperre bei der Handbetätigungseinrichtung erforderlich.

Es ist daher die Aufgabe der vorliegenden Erfindung, auf einfache und zuverlässige Weise eine Bewegung des Verriegelungskörpers aus der Verriegelungsstellung in die Entriegelungsstellung zu verhindern.

Zur Lösung der Aufgabe ist eine Anhängekupplung gemäß der technischen Lehre des Anspruchs 1 vorgesehen.

Das Entsperr-Betätigungsglied hat eine Übertragungsfläche zur Übertragung einer Stellkraft der Federanordnung auf dem Verriegelungskörper in Richtung seiner Verriegelungsstellung. Somit wirkt die Federanordnung über das Entsperr-Betätigungsglied auf den Verriegelungskörper. Eine Kraftumlenkung ist nicht nötig.

*Es ist vorgesehen,* dass die Verriegelungseinrichtung einen zwischen einer Freigabestellung und einer Sperrstellung verstellbaren Sperrkörper zum Versperren einer Bewegung des Verriegelungskörpers aus der Verriegelungsstellung in die Entriegelungsstellung aufweist, dass die Verriegelungseinrichtung ein mit dem Betätigungsorgan betätigbares Entsperr-Betätigungsglied zu einem Betätigen des Sperrkörpers aus seiner Sperrstellung in seine Freigabestellung aufweist, in der der Sperrkörper von dem Verriegelungskörper nach seitlich außen weg bewegt ist, und dass die Verriegelungseinrichtung eine Kopplungsanordnung zur Kopplung des Verriegelungskörpers und des Entsperr-Betätigungsglieds mit dem Betätigungsorgan aufweist, so dass bei einer Entriegelungsbetätigung des Betätigungsorgans zuerst das Entsperr-Betätigungsglied den Sperrkörper in seine Freigabestellung verstellt und danach das Betätigungsorgan den Verriegelungskörper in Richtung der Entriegelungsstellung verstellt.

Die Entriegelungsbetätigung ist vorzugsweise eine Zugbetätigung. Prinzipiell wäre es auch möglich, den Verriegelungskörper durch eine Druckbetätigung in seine Entriegelungsstellung zu verstellen. Bei beiden Betätigungsformen ist ein Grundgedanke der Erfindung, dass durch die jeweilige Entriegelungsbetätigung zunächst das Entsperr-Betätigungsglied den Sperrkörper in seine Freigabestellung verstellt und dann das Betätigungsorgan eine Betätigungskraft, beispielsweise eine Zugkraft oder eine Druckkraft, zum Verstellen in die Entriegelungsstellung auf den Verriegelungskörper ausübt. Es ist somit eine sequentielle Bewegungsfolge realisiert, das heißt, zunächst Entsperren der Verriegelungseinrichtung und dann Entriegeln.

Vorzugsweise ist das Betätigungsorgan ein Zugorgan zur Ausübung einer Zugbetätigung beziehungsweise zur Ausübung einer Zugkraft auf den Verriegelungskörper. Prinzipiell möglich wäre aber auch ein Druckorgan, das eine Druckkraft bei einer Druckbetätigung auf den Verriegelungskörper beziehungsweise das Entsperr-Betätigungsglied ausübt.

Der Sperrkörper ist vorteilhaft in die Sperrstellung federbelastet. Der Sperrkörper nimmt die Sperrstellung zweckmäßigerweise selbsttätig ein. Es ist auch möglich, dass der Sperrkörper durch eine sonstige Maßnahme in die Sperrstellung verstellbar ist, z.B. durch eine Bewegungskopplung mit dem Verriegelungskörper und/oder dem Betätigungsorgan und/oder der Kopplungsanordnung oder dergleichen.

Ein erfindungsgemäßer Ansatz ist, dass der Sperrkörper seitlich, das heißt beispielsweise von radial außen bei einem kreisförmigen oder elliptischen Querschnitt des Verriegelungskörpers, auf den Verriegelungskörper wirkt. Bei dieser Konfiguration ist beispielsweise ein großzügiger Bauraum, zum Beispiel am Halter oder am Kupplungsarm, für eine vorteilhaft den Sperrkörper in die Sperrstellung belastende Federanordnung vorhanden.

Die Federanordnung wirkt zweckmäßigerweise unmittelbar auf den Sperrkörper. Somit ist kein Getriebe vorhanden. Die Federanordnung wirkt sozusagen getriebelos auf den Sperrkörper. Dann kann die Federkraft unmittelbar und ohne Reibungsverluste auf den Sperrkörper einwirken.

Ein Grundgedanke der Erfindung ist es, dass der Sperrkörper einen Bestandteil der Verriegelungseinrichtung bildet, so dass die Sperre beziehungsweise die Entsperrung vor Ort bei der Verriegelungseinrichtung stattfindet. Eine Kraftübertragung auf eine von der Verriegelungseinrichtung separate Sperre, beispielsweise mittels des Druck-Bowdenzugs bei einer Anhängekupplung gemäß EP 1 475 253 A1, ist nicht erforderlich. Dadurch ist die erfindungsgemäße Anhängekupplung beziehungsweise Verriegelungseinrichtung besonders einfach aufgebaut. Man kann lediglich beispielsweise ein Zugorgan verwenden, zum Beispiel einen Seilzug, der nicht auf Druck belastbar sein muss - dies jedoch prinzipiell sein kann. Ferner kann eine einfache Betätigungseinrichtung, beispielsweise Hand-Betätigungseinrichtung, verwendet werden, die keinerlei Sperrmittel aufweist, um die Verriegelungseinrichtung in ihrer Verriegelungsstellung zu sperren. Weiterhin ist die Sicherheit erhöht, da nur vor Ort in der Verriegelungseinrichtung Sperrorgane vorhanden sind und nicht die Gefahr einer äußeren Beschädigung, beispielsweise des vorgenannten Druck-Bowdenzugs oder sonstiger Betätigungsmittel, besteht und somit die Sicherheitsfunktion der gegen ein unbeabsichtigtes Entriegeln wirksamen Sperre, z.B. des Sperrkörpers, optimal ist.

Der Sperrkörper ist zweckmäßigerweise eine Art Sperrriegel. Prinzipiell wäre es aber auch möglich, beispielsweise eine Sperrkugel oder dergleichen als einen Sperrkörper zu verwenden. Der Sperrkörper kann auch mehrteilig sein, wobei dessen einzelne Komponenten dann vorteilhaft fest miteinander verbunden sind.

Die Kopplungsanordnung könnte prinzipiell das Betätigungsorgan, beispielsweise das Zugorgan oder Druckorgan, individuell mit dem Verriegelungskörper und dem Entsperr-Betätigungsglied koppeln und dabei den vorgenannten zweistufigen Bewegungsablauf (zuerst Entsperren, dann Entriegeln) herstellen.

Vorzugsweise ist die Kopplungsanordnung jedoch in Betätigungsrichtung des Betätigungsorgans mit einem Freigang zwischen dem Verriegelungskörper und dem Entsperr-Betätigungsglied angeordnet. Über den Freigang ist die zweistufige Betätigungsweise möglich, so dass das Betätigungsglied nämlich zuerst das Entsperr-Betätigungsglied betätigt und sodann, nach Durchlaufen des Freigangs, auf den Verriegelungskörper wirkt. An dieser Stelle sei bemerkt, dass es zwar vorteilhaft ist, wenn bei einer Entriegelungsbetätigung des Betätigungsorgans das Entsperr-Betätigungsglied den Sperrkörper in seine Freigabestellung verstellt, bevor das Betätigungsorgan eine Betätigungskraft auf den Verriegelungskörper in Richtung der Entriegelungsstellung ausübt. Prinzipiell ist es aber möglich, dass das Betätigungsorgan eine Betätigungskraft - wenn auch vorteilhaft nur in geringem Umfang - auf den Verriegelungskörper in Richtung der Entriegelungsstellung bereits während des Entsperrens ausübt.

Die Kopplungsanordnung weist zweckmäßigerweise einen Zuganker mit einer Halteaufnahme auf, in der das Halteglied, insbesondere ein Querbolzen, mit Spiel bezüglich einer Zugrichtung der Betätigungsrichtung aufgenommen ist.

Zwischen dem Entsperr-Betätigungsglied und dem Verriegelungskörper kann zweckmäßigerweise eine Feder oder eine Federanordnung vorgesehen sein.

Die Kopplungsanordnung ist zweckmäßigerweise in einem Innenraum des Verriegelungskörpers und/oder in einem Innenraum des Entsperr-Betätigungsglieds angeordnet. Dadurch ist der Platzbedarf niedrig. Insbesondere in unbetätigtem Zustand ist die Kopplungsanordnung in einem oder beiden der vorgenannten Innenräume geschützt untergebracht.

Der Verriegelungskörper und das Entsperr-Betätigungsglied sind zweckmäßigerweise koaxial, beispielsweise in einer Zugrichtung oder Druckrichtung des Betätigungsorgans.

Vorzugsweise ist auch die Federanordnung oder ein mit der Verriegelungseinrichtung verbundenes Ende des Betätigungsorgans koaxial mit dem Verriegelungskörper und/oder dem Entsperr-Betätigungsglied. Bei der vorgenannten Reihenanordnung ist keine Kraftumlenkung zwischen den einzelnen Komponenten nötig.

Das Entsperr-Betätigungsglied ist zweckmäßigerweise zwischen dem Verriegelungskörper und der Federanordnung angeordnet. Diese Konfiguration ist insbesondere bei einer Zugbetätigung vorteilhaft. Bei einer Druckbetätigung kann es hingegen zweckmäßig sein, wenn die Federanordnung von einer Seite auf den Verriegelungskörper wirkt, während das Entsperr-Betätigungsglied am anderen Längsende des Verriegelungskörpers angeordnet ist und durch das als Druckorgan ausgestaltete Betätigungsorgan betätigbar ist. Bei dieser Anordnung ist es vorteilhaft, wenn zwischen dem Entsperr-Betätigungsglied und dem verriegelungskörper eine Feder angeordnet ist, die entgegen der Druckkraft des Druck-Betätigungsorgans wirksam ist.

Das Entsperr-Betätigungsglied und der Sperrkörper sind zum Betätigen des Sperrkörpers in die Freigabestellung zweckmäßigerweise über ein Keilgetriebe gekoppelt. Hier sei bemerkt, dass beispielsweise auch ein Zahngetriebe, Seilgetriebe oder dergleichen ohne weiteres möglich sind. Ein Keilgetriebe ist jedoch einfach und zuverlässig.

Bei dem Keilgetriebe ist es vorteilhaft, wenn an dem Sperrkörper eine Schrägfläche vorgesehen ist, die neben einer gegenüber dem Verriegelungskörper wirksamen Sperranschlagfläche verläuft. Vorzugsweise verläuft die Schrägfläche zwischen Sperranschlagflächen. Die Sperranschlagflächen sind beispielsweise an Anschlagarmen, insbesondere gabelartig verlaufenden An-schlagarmen, vorgesehen, zwischen denen die Schrägfläche verläuft.

Bei der Schrägfläche ist es vorteilhaft, wenn sie im Vergleich zu der Sperranschlagfläche eine größere Neigung von dem Verriegelungskörper weg hat. Beispielsweise ist die Sperranschlagfläche in etwa rechtwinkelig zu dem Außenumfang des Verriegelungskörpers. Die mindestens eine Sperranschlagfläche ist vorzugsweise eine ebene Planfläche, so dass eine möglichst große Krafteinleitung möglich ist. Die Winkelstellung der Sperranschlagfläche bezüglich der Betätigungsbahn des Verriegelungskörpers ist vorzugsweise so, dass der Verriegelungskörper den Sperrkörper nicht in die Freigabestellung verstellen kann.

Prinzipiell wäre es möglich, die Verriegelungseinrichtung im Kupplungsarm anzuordnen. Eine bevorzugte Ausführungsform sieht jedoch vor, dass die Verriegelungseinrichtung einschließlich des Sperrkörpers am Halter angeordnet ist.

Die Erfindung ist ohne weiteres bei Steck-Anhängekupplungen realisierbar, bei denen der Kupplungsarm an den Halter ansteckbar, beispielsweise in eine Halterhülse einsteckbar ist.

Bevorzugt ist die Verwendung der Erfindung jedoch bei drehund/oder schiebebeweglich am Halter gelagerten Kupplungsarmen. Der Kupplungsarm ist unverlierbar, das heißt nicht vom Halter entfernbar, jedoch am Halter verstellbar, beispielsweise zwischen einer zum Anhängen des Anhängers vorgesehenen, vorteilhaft nach hinten vor einen Stoßfänger des Kraftfahrzeugs vorstehenden Arbeitsstellung und einer für den Nichtgebrauch vorgesehenen Ruhestellung, bei der der Kupplungsarm zweckmäßigerweise in einer im Wesentlichen verborgenen Stellung unterhalb des Kraftfahrzeugs, in einem Zwischenraum zwischen Stoßfänger und Karosserie oder dergleichen, untergebracht ist.

Die Verriegelungseinrichtung ist zweckmäßigerweise vollständig, zumindest aber teilweise geschützt in einem Innenraum, beispielsweise des Halters, des Kupplungsarms oder einem Innenraum einer den Kupplungsarm am Halter beweglich lagernden Lageranordnung angeordnet. Somit ist die Verriegelungseinrichtung, vorzugsweise einschließlich der erfindungsgemäßen Verriegelungssperre, vor Umwelteinflüssen geschützt. Die Lageranordnung umfasst beispielsweise eine Hohlwelle, in deren Innenraum zumindest Teile der Verriegelungseinrichtung angeordnet sind.

Prinzipiell wäre es möglich, dass der Verriegelungskörper den Kupplungsarm unmittelbar am Halter verriegelt, z.B. verkeilt. Eine bevorzugte Ausführungsform sieht jedoch vor, dass die Verriegelungseinrichtung mindestens ein beweglich gelagertes Verriegelungselement aufweist, das durch den Verriegelungskörper, der insbesondere ein Verdrängerkörper ist, in eine Verriegelungsstellung zur Verriegelung des Kupplungsarms am Halter verstellbar ist. Der Verriegelungskörper verdrängt sozusagen das Verriegelungselement. Somit wirkt der Verriegelungskörper nicht unmittelbar verriegelnd, sondern über mindestens ein dazwischengeschaltetes Verriegelungselement. Bevorzugt ist beispielsweise eine Mehrkugelanordnung, insbesondere eine Dreikugelanordnung, mit Kugeln als Verriegelungselementen.

Zum Verriegeln und Fixieren des Kupplungsarms am Halter sind zweckmäßigerweise Formschlusskonturen sowohl am Halter als auch an einem an dem Halter beweglich gelagerten Arm-Lagerteil des Kupplungsarms angeordnet. Das Arm-Lagerteil kann den Kupplungsarm halten oder ein integrales Bauteil des Kupplungsarms sein, das heißt ein Bestandteil des Kupplungsarms. Die Verriegelungseinrichtung ist zweckmäßigerweise zum Verstellen der Formschlusskonturen zueinander ausgestaltet, derart, dass sie die Formschlusskonturen in der Verriegelungsstellung formschlüssig ineinandergreifend verstellt. In der Entriegelungsstellung sind die Formschlusskonturen voneinander entfernt und lassen so eine Bewegung des Kupplungsarms zu. Beispielsweise verstellt die Verriegelungseinrichtung das Arm-Lagerteil in Richtung des Halters oder umgekehrt. Vorzugsweise verstellt die Verriegelungseinrichtung das Arm-Lagerteil und den Halter relativ zueinander radial und/oder axial, das heißt in einer Linearbewegung oder einer Drehbewegung. Eine Kombination beider Bewegungsarten (radiales und/oder axiales Verstellen) ist ebenfalls denkbar.

Der Kupplungsarm ist an dem Halter zweckmäßigerweise über eine Hohlwellen-Lageranordnung beweglich gelagert. Bei dieser Lagerart ist ein Lagerteil auf einer Hohlwelle beweglich, beispielsweise schiebebeweglich und/oder drehbeweglich gelagert. Der Verriegelungskörper ist in einem Innenraum der Hohlwelle beweglich aufgenommen, beispielsweise schiebebeweglich und/oder drehbeweglich. Das mindestens eine Verriegelungselement, beispielsweise ein Wälzkörper, eine Kugel oder dergleichen, ist in einem Führungskanal an der Hohlwelle beweglich gelagert, wobei sich der Führungskanal zwischen dem Innenraum und einer äußeren Lagerfläche der Hohlwelle erstreckt. Somit ist das Verriegelungselement durch den Verriegelungskörper vom Innenraum her nach außen vor die Lagerfläche verdrängbar, so dass das Verriegelungselement zumindest teilweise vor die Lagerfläche vorsteht und gegen das Lagerteil wirkt. Das Lagerteil ist zweckmäßigerweise ein Arm-Lagerteil des Kupplungsarms oder ein Arm-Lagerteil, das den Kupplungsarm trägt.

Das mindestens eine teilweise vor die Lagerfläche vorstehende Verriegelungselement kann in einer im Ausführungsbeispiel nicht dargestellten Variante das Lagerteil unmittelbar am Halter verriegeln, so dass das Lagerteil unbeweglich ortsfest bezüglich des Halters, z.B. der Hohlwelle, festgelegt ist.

Vorzugsweise ist die Anordnung jedoch so getroffen, dass das Verriegelungselement beim Verdrängen vor die Lagerfläche das Lagerteil an der Hohlwelle verstellt, insbesondere linear verstellt, so dass mindestens eine mit dem Lagerteil fest verbundene Formschlusskontur in eine mit der Hohlwelle fest verbundene Formschlusskontur formschlüssig verriegelnd eingreift. Zur Herstellung dieses Formschlusses wäre auch eine Drehbetätigung oder eine kombinierte Linearbetätigung und Drehbetätigung möglich. Somit wirkt also der Verriegelungskörper zunächst auf die Verriegelungselemente, die wiederum ihrerseits das Lagerteil verstellen, um Formschlusskonturen in Eingriff zu bringen.

Ferner können auch Entsperrelemente vorgesehen sein, die vom Verriegelungselement zweckmäßigerweise betätigt werden, um die Formschlusskonturen in die voneinander entfernte Freigabestellung zu betätigen. Eine solche Ausführungsform, ähnlich wie bei der Anhängekupplung gemäß EP 1 475 253 A1, ist bei der erfindungsgemäßen Anhängekupplung vorteilhaft vorgesehen.

Die Hohlwelle ist zweckmäßigerweise mit dem Halter verbunden oder mit diesem einstückig. Das Lagerteil ist bei dieser Konfiguration mit dem Kupplungsarm verbunden oder mit diesem einstückig.

Das Betätigungsorgan ist zweckmäßigerweise flexibel, insbesondere biegeflexibel. Dadurch ist eine freie Anordnung des Betätigungsorgans möglich, das beispielsweise vom Halter weg in einen Innenraum, insbesondere in ein Gepäckabteil des Kraftfahrzeuges, verläuft, wo eine manuelle und/oder motorische Betätigungseinrichtung zur Betätigung des Betätigungsorgans vorhanden ist.

Für das Betätigungsorgan sind zweckmäßigerweise eine Hand-betätigungseinrichtung zur manuellen Betätigung und/oder auch eine motorische Löseanordnung beziehungsweise ein motorischer Löseantrieb vorgesehen. Für einen Notbetrieb, z.B. bei einer Motorstörung, ist es vorteilhaft, wenn neben einem motorischen Löseantrieb auch eine Handbetätigungseinrichtung, zumindest eine Handhilfsbetätigungseinrichtung vorgesehen ist.

Die motorische Betätigungseinrichtung ist zweckmäßigerweise im Außenbereich des Kraftfahrzeugs, vorzugsweise am Halter, angeordnet. Es ist aber auch möglich, dass ein Antrieb der motorischen Betätigungseinrichtung in einem Innenraum des Kraftfahrzeugs anzuordnen und mindestens ein Übertragungsglied, z.B. ein Seilzug, eine Stange oder dergleichen, zwischen der Verriegelungseinrichtung und einem Antrieb der motorischen Betätigungseinrichtung vorzusehen.

Der Verriegelungskörper und das Entsperr-Betätigungsglied sind zweckmäßigerweise linear beweglich gelagert. Vorzugsweise sind der Verriegelungskörper und das Entsperr-Betätigungsglied im Wesentlichen senkrecht zueinander beweglich gelagert. Es versteht sich, dass auch eine rotatorische Entsperrbetätigung möglich ist.

Nachfolgend wird ein Ausführungsbeispiel der Erfindung anhand der Zeichnung erläutert. Es zeigen:
- Figur 1: eine perspektivische Schrägansicht einer erfindungsgemäßen Anhängekupplung,
- Figur 2: die Anhängekupplung gemäß Figur 1, jedoch bei entferntem Kupplungsarm,
- Figur 3: eine Querschnittsansicht der Anhängekupplung entlang einer Schnittlinie A-A in Figur 1,

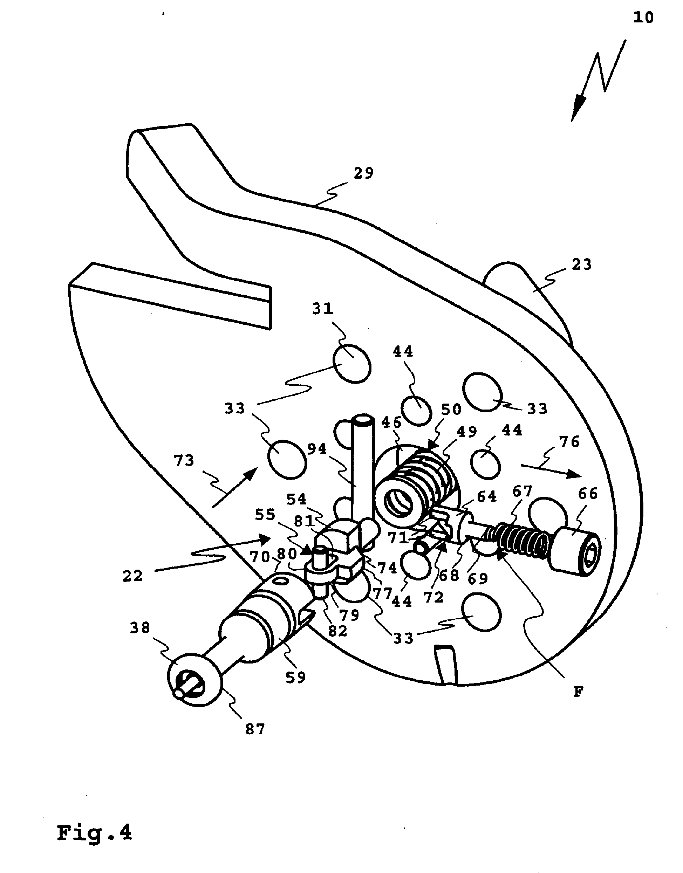

- Figur 4: eine Explosionsdarstellung der Anhängekupplung gemäß Figur 3, wobei ein den Kupplungsarm tragendes Lagerteil entfernt ist und ein Sperrkörper in Freigabestellung ist,
- Figur 5a: eine Ansicht entsprechend Figur 4 mit einer Verriegelungseinrichtung in Verriegelungsstellung,
- Figur 5b: die Ansicht entsprechend Figur 5a, jedoch mit explosionsartig entfernt dargestelltem Verriegelungskörper,
- Figur 6: die Verriegelungseinrichtung gemäß Figur 4 mit bereits entsperrtem Sperrkörper aber noch verriegeltem Verriegelungskörper und
- Figur 7: die Verriegelungseinrichtung gemäß Figur 4 in Entriegelungsstellung.

Eine Anhängekupplung 10 zum Ankuppeln eines Anhängers 11 an ein Kraftfahrzeug 12 umfasst einen Halter 13, der an einem schematisch dargestellten Querträger 14 des Kraftfahrzeugs 12 befestigbar, beispielsweise anschraubbar, anschweißbar oder dergleichen ist. Der Halter 13 hält einen Kupplungsarm 15. Der Kupplungsarm 15 ist mittels eines Schwenk-Schiebelagers 16 einer Lageranordnung 17 schwenkbeweglich und schiebebeweglich an dem Halter 13 gelagert.

Ein Halsabschnitt 19 des Kupplungsarms 15 steht von einem am Halter 13 beweglich gelagerten Arm-Lagerteil 18 ab und trägt an seinem freien, vom Halter 13 entfernten Ende einen Kugelkopf 20 zum Ankuppeln des Anhängers 11.

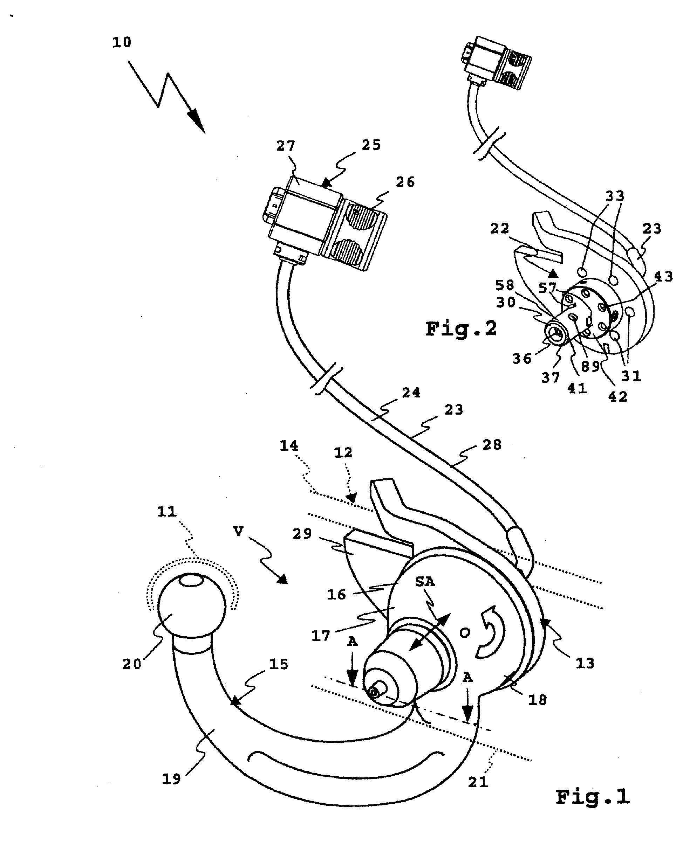

Mit Hilfe der Lageranordnung 17 ist der Kupplungsarm 15 zwischen seiner in Figur 1 dargestellten Arbeitsstellung, bei der er vor einen Stoßfänger 21 des Kraftfahrzeugs 12 nach hinten vorsteht, und einer verdeckten, beispielsweise hinter dem Stoßfänger 21 und/oder unterhalb der Karosserie des Kraftfahrzeugs 12 verborgenen Nichtgebrauchsstellung oder Ruhestellung verschwenkbar.

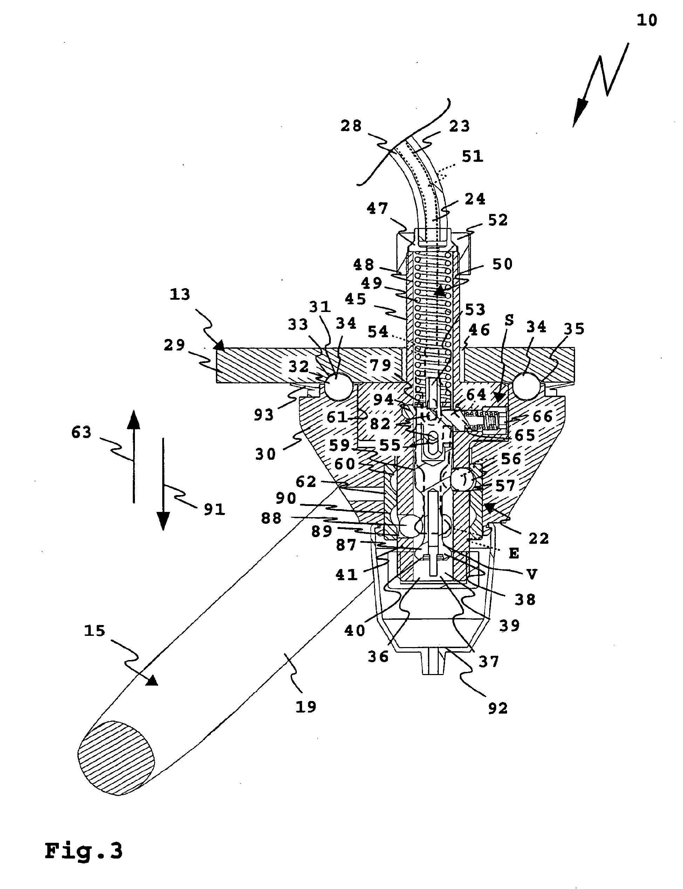

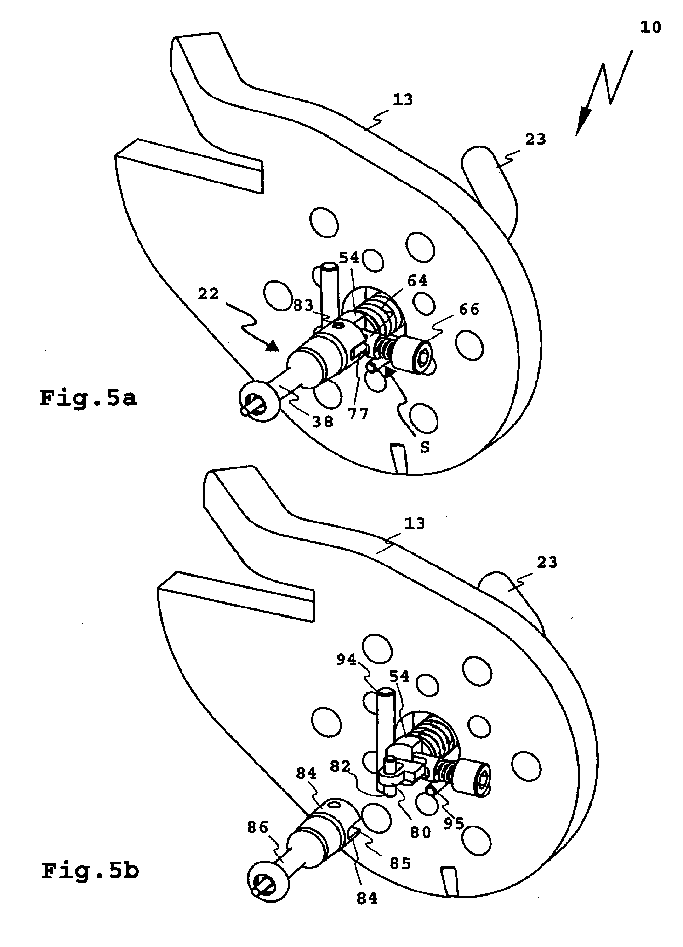

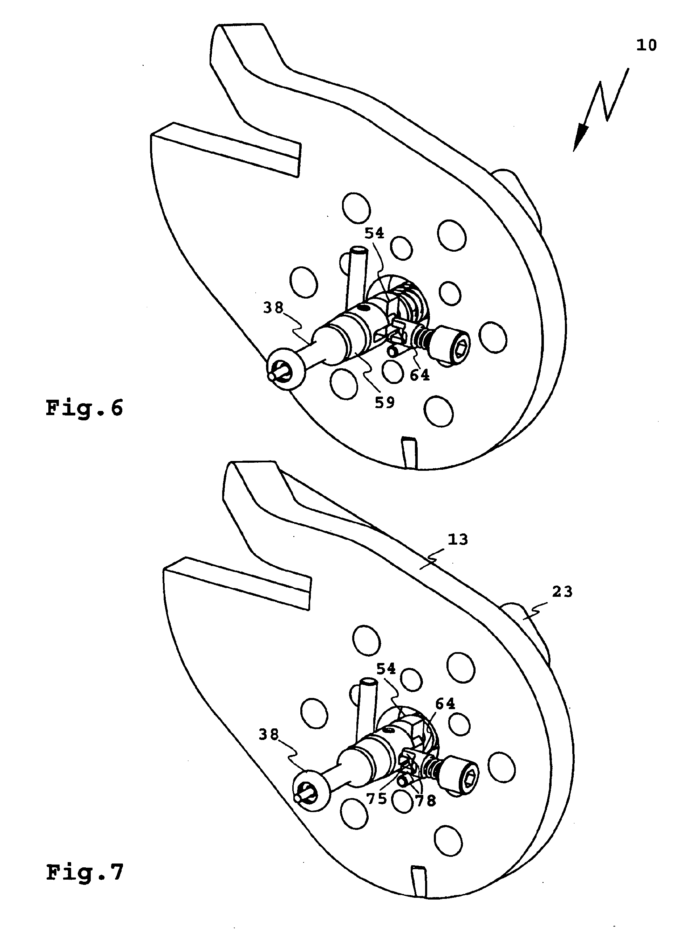

Zumindest in der Arbeitsstellung, vorzugsweise auch in der Nichtgebrauchsstellung, ist der Kupplungsarm 15 mittels des Arm-Lagerteils 18 mit einer Verriegelungseinrichtung 22 verriegelbar. Die Verriegelungseinrichtung 22 ist durch ein Betätigungsorgan 23 aus ihrer Verriegelungsstellung V (Figuren 1, 3, 5a, 5b) in eine Entriegelungsstellung E (Figur 7) verstellbar, in der das Arm-Lagerteil 18 bezüglich des Halters 13 bewegbar ist.

Die Verriegelungseinrichtung 22 kann mit dem Betätigungsorgan 23, das ein Zugorgan 24 umfasst, von der Verriegelungsstellung V in die Entriegelungsstellung E verstellt werden. Das Betätigungsorgan 23 erstreckt sich zwischen der Verriegelungseinrichtung 22 am Halter 13 und einer Handbetätigungseinrichtung 25 zur manuellen Betätigung des Betätigungsorgans 23. Das Zugorgan 24 umfasst einen Bowdenzug 28. Der Bowdenzug 28 kann beispielsweise vom Außenbereich des Kraftfahrzeugs 12 in einen Innenraum, beispielsweise ein Gepäckabteil, verlaufen, wo die Handbetätigungseinrichtung 25 vorteilhaft angeordnet ist. Eine Handbetätigungseinrichtung kann z.B. auch einen Bedienhebel oder eine Hebelanordnung umfassen. Der Bedienhebel kann im Außenbereich des Kraftfahrzeugs oder auch in dessen Innenraum vorgesehen sein.

Die Handbetätigungseinrichtung 25 umfasst ein Handrad 26, das an einem Gehäuse 27 drehbar ist, um das Zugorgan 24 zu ziehen. Prinzipiell wäre anstelle des Bowdenzugs 28 auch ein einfacher Seilzug, eine Zugstange oder dergleichen ohne weiteres möglich. Der Bowdenzug 28 erlaubt jedoch eine relativ freie Verlegung an dem Kraftfahrzeug 12.

Eine am Querträger 14 befestigte Trägerplatte 29 des Halters 13 trägt einen Lagerkopf 30, auf dem das Arm-Lagerteil 18 schiebebeweglich und schwenkbeweglich gelagert ist. Durch eine Verschiebebewegung entlang einer Schiebeachse SA ist das Arm-Lagerteil 18 auf dem Lagerkopf 30 von der Trägerplatte 29 weg oder zu dieser hin verschieblich. Wenn das Arm-Lagerteil 18 von der Trägerplatte 29 weg verschoben ist, sind Formschlusskonturen 31 am Halter 13 und Formschlusskonturen 32 am Arm-Lagerteil 18 außer Eingriff, so dass das Arm-Lagerteil 18 schwenkbeweglich bezüglich des Halters 13 ist.

Wenn das Arm-Lagerteil 18 hingegen entlang der Schiebeachse SA zum Halter 13 beziehungsweise zur Trägerplatte 29 hin verschoben ist, greifen die Formschlusskonturen 31, 32 formschlüssig ineinander und verriegeln so das Arm-Lagerteil 18 am Halter 13 zumindest drehbeweglich. Die Formschlusskonturen 31 umfassen ringförmig um den Lagerkopf 30 herum angeordnete Kalotten 33, in die Kugeln 34 eingreifen, die ihrerseits an einer dem Halter 13 zugewandten Stirnseite 35 des Arm-Lagerteils 18 angeordnet sind.

Es versteht sich, dass anstelle von Kugeln und Kalotten beispielsweise auch bolzenartige Vorsprünge, die in korrespondierende Sacklöcher eingreifen, möglich sind. Ferner könnte auch mindestens ein männliches Formschlussteil ohne weiteres auch am Halter, mindestens ein weibliches Formschlussteil am Arm-Lagerteil angeordnet sein.

Die Verriegelungseinrichtung 22 ist geschützt in einem Innenraum 36 einer Hohlwelle 37 des Lagerkopfs 30 angeordnet. In dem Innenraum 36 ist ein Verriegelungskörper 38 in einem Linearführungskanal 39 linear verschieblich gelagert. Der Verriegelungskörper 38 ist vorliegend ein Verdrängerkörper 40 zum Verdrängen von Verriegelungselementen 56. Der Verriegelungskörper 38 ist im Wesentlichen in einem vorderen, freien Abschnitt 41 des Lagerkopfs 30 beziehungsweise der Hohlwelle 37 mit einem kleineren Durchmesser angeordnet. Der Abschnitt 41 steht vor einen Basisabschnitt 42 des Lagerkopfs 30 vor, der einen im Vergleich zum Abschnitt 41 größeren Durchmesser hat und eine Befestigungsbasis zur Befestigung an der Trägerplatte 29 bildet. Am Basisabschnitt 42 sind Schraublöcher 43 angeordnet, die sich in der Schieberichtung SA erstrecken und zur Aufnahme in Schraubaufnahmen 44 an der Trägerplatte 29 vorgesehen sind.

An den Basisabschnitt 42 schließt sich ein Kammerabschnitt 45 des Lagerkopfs 30 an, der einen Durchbruch 46 an der Trägerplatte 29 durchdringt. Dadurch steht der Kammerabschnitt 45 nach hinten vor die Trägerplatte 29 vor. Somit erstreckt sich der Innenraum 36, in dem die Verriegelungseinrichtung 22 angeordnet ist, über die Abschnitte 41, 42 und 45, die jeweils endseitig verschlossen sind. Dadurch ist die Verriegelungseinrichtung 22 vor Umwelteinflüssen optimal geschützt. Weiterhin trägt zu ihrem mechanischen Schutz bei, dass das Arm-Lagerteil 18 sozusagen auf den Lagerkopf 30 aufgesetzt ist und diesen mantelt. Das Arm-Lagerteil 18 hat eine im Wesentlichen stumpfkegelige Form.

Der Kammerabschnitt 45 ist endseitig durch einen Deckel 47 verschlossen, so dass eine Federkammer 48 im Innern des Kammerabschnitts 45 vollständig verschlossen ist. In der Federkammer 48 ist eine Feder 49 einer Federanordnung 50 angeordnet, die sich an dem Deckel 47 abstützt.

Der Deckel 47 hat einen Durchbruch für ein Zugseil 51, das im Innern des Betätigungsorgans 23 verläuft. Das Zugseil 51 ist durch ein Anschlussstück 52 am Deckel 47 hindurchgeführt. Das Anschlussstück 52 dient zum Anschluss des Bowdenzugs 28 an den Halter 13 beziehungsweise die Verriegelungseinrichtung 22.

Das Zugseil 51 ist durch einen Innenraum der als Schraubenfeder ausgestalteten Feder 49 geführt und an einer Halterung 53 eines Entsperr-Betätigungsglieds 54 festgelegt, beispielsweise eingeschraubt, verklemmt, verklebt oder dergleichen.

Das Entsperr-Betätigungsglied ist mittels einer Kopplungsanordnung 55 in Zugrichtung des Zugseils 51 mit dem Verriegelungskörper 38 zuggekoppelt. Ferner stützt sich die als Druckfeder ausgestaltete Feder 49 an ihrem dem Deckel 47 entgegengesetzten Ende hinten am Entsperr-Betätigungsglied 54 ab und drückt dieses in Richtung des Verriegelungskörpers 38. Mithin betätigt also die Federanordnung 50 den Verdrängerkörper 40 über das zwischengeschaltete Entsperr-Betätigungsglied 54 in seine Verriegelungsstellung V.

In der Verriegelungsstellung V verdrängt der Verriegelungskörper 38 in seiner Eigenschaft als Verdrängerkörper 40 die Verriegelungselemente 56. Die Verriegelungselemente 56 sind in Führungskanälen 57 beweglich gelagert, die sich zwischen einer Außenfläche 58 der Hohlwelle 37 und dem Innenraum 36 erstrecken. Die Verriegelungselemente 56 sind vorliegend Kugeln, wobei auch andere Formschlusselemente, beispielsweise Bolzen, Rollen oder dergleichen ohne weiteres möglich sind. Der Verdrängerkörper 40 verdrängt in der Verriegelungsstellung V mit einer Verdrängerfläche 59 die Verriegelungselemente 56 nach radial außen durch die Führungskanäle 57 hindurch, so dass sie vor die Außenfläche 58 vorstehen. Dort greifen die Verriegelungselemente 56 in eine Verriegelungsaufnahme 60 im Innenraum des Arm-Lagerteils 18 ein. Die Verriegelungsaufnahme 60 ist mit einer derartigen Kontur ausgestaltet, dass die nach radial außen verdrängten Verriegelungselemente 56 eine Andrückkraft 63 in Richtung des Halters 13 auf das Arm-Lagerteil 18 ausüben.

Die Verriegelungsaufnahme 60 ist ringförmig, z.B. als eine Kugelsitzrinne ausgestaltet, so dass es auf die jeweilige Drehposition des Arm-Lagerteils 18 bezüglich des Halters 13 insoweit nicht ankommt. Beispielsweise ist die Verriegelungsaufnahme 60 an einem Ringeinsatz 62 angeordnet, der in einer Lageraufnahme 61 des Arm-Lagerteils 18 festgelegt ist.

Korrespondierend mit den unterschiedlichen Durchmessern des Abschnitts 41 und des Basisabschnitts 42 des Lagerkopfs 30 ist die Lageraufnahme 61 stufig.

Zwar hat die Verdrängerfläche 59 eine selbstsperrende Schrägneigung von beispielsweise etwa 2 bis 5°, damit eine Rückwirkung der Verriegelungselemente 56 in Richtung der Entriegelungsstellung E den Verdrängerkörper 40 bzw. Verriegelungskörper 38 an sich nicht in die Entriegelungsstellung E verdrängen kann. Durch die Federkraft der Feder 49, die über die Verdrängerfläche 59, die Verriegelungselemente 56 (Kugeln) in die Lageraufnahmen 61 in die Andrückkraft 63 umgelenkt wird, bleibt an sich das Arm-Lagerteil 18 sicher am Halter 13 verriegelt.

Eine erfindungsgemäße Sperre schafft eine zusätzliche Sicherheit:

Ein Sperrkörper 64, beispielsweise eine Art Sperrriegel, sperrt den Verriegelungskörper 38 in der Verriegelungsstellung V gegen einer Entriegelungsbewegung in Richtung der Entriegelungsstellung E. Der Sperrkörper 64 ist in einer Sperrkörperführung 65 im Innern des Lagerkopfs 30, das heißt im Innenraum 36, schiebebeweglich gelagert. Die Sperrkörperführung 65 verläuft quer, vorliegend senkrecht quer, zu dem Linearführungskanal 39 zur linearen Führung des Verriegelungskörpers 38.

Die Sperrkörperführung 65 erstreckt sich vom Linearführungskanal 39 nach radial außen vor eine Umfangswand des Basisabschnitts 42. Die Sperrkörperführung 65 ist mit einem Deckel 66 verschlossen, so dass auch der Sperrkörper 64 geschützt im Innenraum 36 aufgenommen ist.

Der Deckel 66 dient als Widerlager für eine Feder 67, die sich einerseits am Deckel 66 und andererseits an einer hinteren Stützfläche 68 des Sperrkörpers 64 abstützt. Ein Führungsvorsprung 69 steht vor die Stützfläche 68 vor und ragt in einen Innenraum der Feder 67 hinein. Das andere Ende der Feder 67 ist in einem Innenraum des Deckels 66 aufgenommen, so dass die Feder 67 an beiden Enden geführt ist. Die Feder 67 ist eine Schraubenfeder. Der Deckel 66 ist als eine Art Schraubkappe ausgestaltet. Der Deckel 66 ist beispielsweise in den Lagerkopf 30 eingeschraubt, wobei ein Verkleben, Einpressen oder Einschweißen ohne weiteres möglich wäre.

Die Feder 67 belastet den Sperrkörper 64 in die Sperrstellung S. In der Sperrstellung schlägt der Verriegelungskörper 38 mit seiner dem Entsperr-Betätigungsglied 54 zugewandten hinteren Stirnseite 70 an Sperranschlagflächen 71 des Sperrkörpers 64 an. Der Sperrkörper 64 stellt sich sozusagen als ein Sperranschlag dem Verriegelungskörper 38 in den Weg. Die beiden Sperranschlagflächen 71 sind Planflächen und ragen im Wesentlichen bis zur Quermitte des Verriegelungskörpers 38 vor. Dies hat den Vorteil, dass die Sperranschlagflächen 71 den Verriegelungskörper 38 großflächig abstützen. Der Sperrkörper 64 steht also großflächig in sperrendem Eingriff mit dem Verriegelungskörper 38.

Das Aufheben dieses Sperreingriffs und Verlagern des Sperrkörpers 64 in eine Freigabestellung F (Figuren 6, 7), in denen der Sperrkörper 64 eine Bewegung des Verriegelungskörpers 38 in die Entriegelungsstellung E zulässt, ist mittels des Entsperr-Betätigungsglieds 54 möglich. Das Entsperr-Betätigungsglied 54 betätigt den Sperrkörper 64 über ein Keilgetriebe 72 in seine Freigabestellung F. Beim Ziehen des Zugorgans 24 wird das Entsperr-Betätigungsglied 54 in einer Zugrichtung 73 in Richtung des Halters 13 verstellt beziehungsweise gezogen. Dabei gleitet eine Schrägfläche 74 des Entsperr-Betätigungsglieds 54 an einer Schrägfläche 75 des Sperrkörpers 64 entlang und verlagert diesen in einer Freigaberichtung 76 in die Freigabestellung F.

Die Schrägfläche 74 ist an einem seitlich vorstehenden Verschiebekeilabschnitt 77 des Entsperr-Betätigungsglieds 54 angeordnet. Der Verschiebekeilabschnitt 77 ragt mit seiner dem Halter 13 zugewandten Schrägfläche 74 zwischen Arme 78 des Sperrkörpers 64, an deren Oberseite die Sperranschlagflächen 71 angeordnet sind. Zwischen den Armen 78 verläuft die Schrägfläche 75 (Figur 7).

In der Freigabestellung F ist der Sperrkörper 64 vollständig aus dem Bewegungsweg des Entsperr-Betätigungsglieds 54 sowie des Verriegelungskörpers 38 herausbewegt, so dass der Verriegelungskörper 38 am Sperrkörper 64 vorbei in seine Entriegelungsstellung E beweglich ist. Bei dieser Bewegung gleiten vordere, freie Enden der Arme 78 am Außenumfang des Verriegelungskörpers 38 entlang.

Damit die Entsperrbetätigung des Sperrkörpers 64 der Entriegelungsbewegung des Verriegelungskörpers 38 vorausgeht, ist die Kopplungsanordnung 55 vorgesehen. Ein Zuganker 79 der Kopplungsanordnung 55 koppelt den Verriegelungskörper 38 mit einem Freigang, z.B. mit einem Längsspiel, entlang der Zugrichtung 73 (insbesondere parallel zur Schiebeachse SA) mit dem Entsperr-Betätigungsglied 54, das mit dem Zugorgan 24 verbunden ist.

Das Entsperr-Betätigungsglied 54 enthält ein Zugteil 80 des Zugankers 79 mit einer Halteaufnahme 81, die von einem Halteglied 82 durchdrungen ist. Das Halteglied 82 ist fest mit dem Verriegelungskörper 38 verbunden. Das Halteglied 82 ist beispielsweise ein Querbolzen, der die Halteaufnahme 81 durchdringt und in Aufnahmen 83 des Verriegelungskörpers 38 aufgenommen ist. Das Halteglied 82 hat innerhalb der Halteaufnahme 81 bezüglich der Zugrichtung 73 ein Freigang-Spiel.

Die Feder 49 drückt in Richtung der Verriegelungsstellung V auf das Entsperr-Betätigungsglied 54 und dieses wiederum auf den Verriegelungskörper 38. In der Verriegelungsstellung V ist das Zugteil 80 in einem Innenraum 85 zwischen Haltearmen 84 des Verriegelungskörpers 38 aufgenommen. Der Innenraum 85 ist ferner dafür ausgelegt, den Verschiebekeilabschnitt 77 in der Verriegelungsstellung V aufzunehmen.

Eine Entriegelung der Verriegelungseinrichtung 22 verläuft nun folgendermaßen: Zunächst wirkt das Zugorgan 24 nur auf das Entsperr-Betätigungsglied 54 und verlagert dieses in Zugrichtung 73, wodurch der Sperrkörper 64 von seiner Sperrstellung S in die Freigabestellung F verstellt wird. Das Halteglied 82 gleitet dabei entlang der Zugrichtung 73 in der Halteaufnahme 81. Der Verriegelungskörper 38 bleibt noch in der Verriegelungsstellung V. Die beiden Komponenten 54 und 38 sind bei diesem ersten Betätigungsabschnitt durch das Spiel der Kopplungsanordnung 55 zugentkoppelt.

Wenn das Halteglied 82 in der Halteaufnahme 81 einen für das Entsperren des Sperrkörpers 64 erforderlichen Betätigungsweg durchlaufen hat, schlägt es an dem dem Verriegelungskörper 38 zugewandten Ende der Halteaufnahme 81 an. Der Sperrkörper 64 ist dann in der Freigabestellung F. Somit ist der Weg des Verriegelungskörpers 38 in die Entriegelungsstellung E frei. Das Entsperr-Betätigungsglied 54 nimmt bei einer weiteren Betätigung des Zugorgans 24 den Verriegelungskörper 38 in die Entriegelungsstellung E mit.

Bei dieser Entriegelung wird zunächst die Verdrängerfläche 59 unterhalb der Verriegelungselemente 56 wegbewegt, so dass ein Freiraumabschnitt 86 des Verriegelungskörpers 38 unterhalb der Verriegelungselemente 56 positioniert ist. Der Freiraumabschnitt 86 gibt einen Bewegungsfreiraum für die Verriegelungselemente 56 frei, so dass diese nach radial innen durch die Führungskanäle 57 hindurch in Richtung des Innenraums 36 beweglich sind, um aus den Verriegelungsaufnahmen 60 herauszugelangen und somit die Verriegelung des Kupplungsarms 15 am Halter 13 aufzuheben. Die Andrückkraft 63 ist dann gleich Null, so dass die Formschlusskonturen 31, 32 außer Eingriff gelangen können.

Das Arm-Lagerteil 18 könnte aber prinzipiell am Halter 13 festbacken, beispielsweise nach langem Fahrbetrieb. Auch für diese Situation sind bei der Anhängekupplung 10 Maßnahmen getroffen. An den Freiraumabschnitt 86 des Verdrängerkörpers 40 schließen sich Schrägflächen 87 zum Betätigen von mindestens einem, vorzugsweise zwei oder drei Entriegelungskörpern 88 an, die in Führungskanälen 89 ähnlich den Führungskanälen 57 beweglich gelagert sind. Die Schrägflächen 87 drücken die Entriegelungskörper 88, vorzugsweise Kugeln, nach radial außen durch die Führungskanäle 89 hindurch in Entriegelungsaufnahmen 90 am Ringeinsatz 62 und erzeugen dadurch eine Ablösekraft 91 zum Ablösen des Arm-Lagerteils 18 vom Halter 13. Die Ablösekraft 91 und die Andrückkraft 63 sind einander entgegengesetzt.

Eine Kappe 92 ist zum Verschließen des Innenraums 36 auf den vom Halter 13 entfernten Endbereich des Arm-Lagerteils 18 aufgesetzt.

Ferner ist eine Dichtung 93 zwischen der Trägerplatte 29 und dem Arm-Lagerteil 18 angeordnet. Die Dichtung 93 ist eine Ringdichtung, die am Arm-Lagerteil 18 angeordnet ist und die Formschlusskonturen 31, 32 umgibt und vor Umwelteinflüssen schützt.

Das Entsperr-Betätigungsglied 54 und der Verriegelungskörper 38 sind durch eine Verdrehsicherung 94 gegen Verdrehen in dem Linearführungskanal 39 geschützt. Die Verdrehsicherung 94 umfasst beispielsweise eine quer zur Längsrichtung des Linearführungskanals 39 verlaufende Fläche, die zum Beispiel von einem Bolzen bereitgestellt wird, an der entsprechende Planflächen am Verriegelungskörper 38 und dem Entsperr-Betätigungsglied 54 entlang gleiten.

Der Sperrkörper 64 ist durch eine Verdrehsicherung 95 verdrehsicher in der Sperrkörperführung 65 geführt. Die Verdrehsicherung 95 weist eine quer zur Längsrichtung des Linearführungskanals 39 verlaufende Fläche auf, die zum Beispiel von einem Bolzen bereitgestellt wird, an der entsprechende Planflächen am Sperrkörper 64 entlang gleitet.

## Patentansprüche

1. Anhängekupplung mit einem Kupplungsarm (15) zum Ankuppeln eines Anhängers (11) und einem an einem Kraftfahrzeug (12), insbesondere einem Personenkraftfahrzeug, befestigbaren Halter (13) zum Halten des Kupplungsarms (15), mit einer Verriegelungseinrichtung (22), die einen durch eine Federanordnung (50) in eine Verriegelungsstellung (V) federbelasteten Verriegelungskörper (38) zum Verriegeln und ortsfesten Festlegen des Kupplungsarms (15) an dem Halter (13) aufweist, wobei der Verriegelungskörper (38) durch eine Entriegelungsbetätigung mit einem Betätigungsorgan (23) aus der Verriegelungsstellung (V) in eine Entriegelungsstellung (E) verstellbar ist, in der der Kupplungsarm (15) bezüglich des Halters (13) beweglich ist, wobei die Verriegelungseinrichtung (22) einen zwischen einer Freigabestellung (F) und einer Sperrstellung (S) verstellbaren Sperrkörper (64) zum Versperren einer Bewegung des Verriegelungskörpers (38) aus der Verriegelungsstellung (V) in die Entriegelungsstellung (E) aufweist, wobei die Verriegelungseinrichtung (22) ein mit dem Betätigungsorgan (23) betätigbares Entsperr-Betätigungsglied (54) zu einem Betätigen des Sperrkörpers (64) aus seiner Sperrstellung (S) in seine Freigabestellung (F) aufweist, in der der Sperrkörper (64) von dem Verriegelungskörper (38) nach seitlich außen weg bewegt ist, und wobei die Verriegelungseinrichtung (22) eine Kopplungsanordnung (55) zur Kopplung des Verriegelungskörpers (38) und des Entsperr-Betätigungsglieds (54) mit dem Betätigungsorgan (23) aufweist, so dass bei einer Entriegelungsbetätigung des Betätigungsorgans (23) zuerst das Entsperr-Betätigungsglied (54) den Sperrkörper (64) in seine Freigabestellung (F) verstellt und danach das Betätigungsorgan (23) den Verriegelungskörper (38) in Richtung der Entriegelungsstellung (E) verstellt, **dadurch gekennzeichnet, dass** das Entsperr-Betätigungsglied (54) eine Übertragungsfläche zur Übertragung einer Stellkraft der Federanordnung (50) auf den Verriegelungskörper (38) in Richtung seiner Verriegelungsstellung (V) aufweist.

2. Anhängekupplung nach Anspruch 1, **dadurch gekennzeichnet, dass** der Sperrkörper (64), insbesondere unmittelbar durch eine Federanordnung (67), in die Sperrstellung (S) federbelastet ist, wobei vorteilhaft die den Verriegelungskörper (38) in die Verriegelungsstellung (V) belastende Federanordnung (50) und die den Sperrkörper (64) in die Sperrstellung (S) belastende Federanordnung (67) zueinander winkelige, zweckmäßigerweise im wesentlichen senkrechte, Wirkrichtungen aufweisen.

3. Anhängekupplung nach Anspruch 1 oder 2, **dadurch gekennzeichnet, dass** die Kopplungsanordnung (55) den Verriegelungskörper (38) mit dem Entsperr-Betätigungsglied (54) in Betätigungsrichtung, insbesondere in Zugrichtung (73), des Betätigungsorgans (23) mit einem Freigang zwischen dem Verriegelungskörper (38) und dem Entsperr-Betätigungsglied (54) koppelt, wobei die Kopplungsanordnung (55) zweckmäßigerweise einen Zuganker (79) mit einer Halteaufnahme aufweist, in der ein Halteglied, insbesondere ein Querbolzen, mit Spiel bezüglich einer Zugrichtung (73) aufgenommen ist.

4. Anhängekupplung nach einem der vorhergehenden Ansprüche, **dadurch gekennzeichnet, dass** die Kopplungsanordnung (55) in einem Innenraum (85) des Verriegelungskörpers (38) und/oder in einem Innenraum des Entsperr-Betätigungsglieds (54) angeordnet ist und/oder dass der Verriegelungskörper (38) und das Entsperr-Betätigungsglied (54) koaxial, insbesondere in einer Zugrichtung (73) des Betätigungsorgans (23), sind.

5. Anhängekupplung nach einem der vorhergehenden Ansprüche, **dadurch gekennzeichnet, dass** das Entsperr-Betätigungsglied (54) zwischen dem Verriegelungskörper (38) und der Federanordnung (50) angeordnet ist.

6. Anhängekupplung nach einem der vorhergehenden Ansprüche, **dadurch gekennzeichnet, dass** das Entsperr-Betätigungsglied (54) und der Sperrkörper (64) zum Betätigen des Sperrkörpers (64) in die Freigabestellung (F) über ein Keilgetriebe (72) gekoppelt sind.

7. Anhängekupplung nach Anspruch 6, **dadurch gekennzeichnet, dass** das Keilgetriebe (72) eine Schrägfläche (75) an dem Sperrkörper (64) aufweist, die neben einer Sperranschlagfläche (71) zum Sperren des Verriegelungskörpers (38), insbesondere zwischen Sperranschlagflächen (71), verläuft, wobei die Schrägfläche (75) vorteilhaft eine stärkere Neigung von dem Verriegelungskörper (38) weg als die Sperranschlagfläche (71) aufweist.

8. Anhängekupplung nach einem der vorhergehenden Ansprüche, **dadurch gekennzeichnet, dass** der Kupplungsarm (15) an den Halter (13) ansteckbar ist oder dass der Kupplungsarm (15) an dem Halter (13) drehbar und/oder verschieblich gelagert ist.

9. Anhängekupplung nach Anspruch 8, **dadurch gekennzeichnet, dass** die Verriegelungseinrichtung (22) vollständig oder zumindest teilweise geschützt in einem Innenraum (36) des Halters (13) und/oder einem Innenraum (36) einer den Kupplungsarm (15) am Halter (13) beweglich lagernden Lageranordnung (17) angeordnet sind und/oder dass zum Verriegeln und Fixieren des Kupplungsarms (15) am Halter (13) Formschlusskonturen (31, 32) an dem Halter (13) und einem an dem Halter (13) beweglich gelagerten Arm-Lagerteil (18) des Kupplungsarms (15) angeordnet sind und die Verriegelungseinrichtung (22) zum Verstellen der Formschlusskonturen (31, 32) zueinander, insbesondere zum Verstellen der Formschlusskonturen (32) des Arm-Lagerteils (18) in Richtung des Halters (13), ausgestaltet ist derart, dass die Formschlusskonturen (31, 32) in der Verriegelungsstellung (V) formschlüssig ineinander greifen und in der Entriegelungsstellung (E) voneinander entfernt sind und eine Bewegung des Kupplungsarms (15) zulassen.

10. Anhängekupplung nach einem der vorhergehenden Ansprüche, **dadurch gekennzeichnet, dass** die Verriegelungseinrichtung (22) mindestens ein beweglich gelagertes Verrieglungselement (56) aufweist, das durch den Verriegelungskörper (38), der insbesondere einen Verdrängerkörper (40) bildet, in eine Verriegelungsstellung (V) zur Verriegelung des Kupplungsarms (15) am Halter (13) verstellbar ist.

11. Anhängekupplung nach einem der Ansprüche 8 bis 10, **dadurch gekennzeichnet, dass** der Kupplungsarm (15) an dem Halter (13) über eine Hohlwellen-Lageranordnung (17) beweglich gelagert ist, bei der ein Lagerteil (18) auf einer Hohlwelle (37) beweglich, insbesondere schiebebeweglich und/oder drehbeweglich, gelagert ist, dass der Verriegelungskörper (38) in einem Innenraum (36) der Hohlwelle (37) beweglich aufgenommen ist, dass das mindestens eine Verrieglungselement (56) in einem Führungskanal der Hohlwelle (37) zwischen dem Innenraum (36) und einer Außenfläche (58) des Hohlwelle (37) beweglich gelagert ist, und dass der Verriegelungskörper (38) in der Verriegelungsstellung (V) das mindestens eine Verrieglungselement (56) durch den Führungskanal nach außen verdrängt, so dass das mindestens eine Verrieglungselement (56) teilweise vor die Außenfläche (58) vorsteht und gegen das Lagerteil (18) wirkt.

12. Anhängekupplung nach Anspruch 11, **dadurch gekennzeichnet, dass** das mindestens eine teilweise vor die Lagerfläche vorstehende Verrieglungselement (56) das Lagerteil (18) an der Hohlwelle (37) verstellt, so dass mindestens eine mit dem Lagerteil (18) fest verbundene Formschlusskontur (31, 32) in eine mit der Hohlwelle (37) fest verbundene Formschlusskontur (31, 32) formschlüssig verriegelnd eingreift und/oder dass die Hohlwelle (37) mit dem Halter (13) und das Lagerteil (18) mit dem Kupplungsarm (15) verbunden oder einstückige Bauteile sind.

13. Anhängekupplung nach einem der vorhergehenden Ansprüche, **dadurch gekennzeichnet, dass** das Betätigungsorgan (23) ein Zugorgan (24) für eine Zugbetätigung ist und/oder dass das Betätigungsorgan (23) zumindest abschnittsweise flexibel ist, und insbesondere einen Seilzug oder einen Bowdenzug (28) umfasst, und/oder sie eine Handbetätigungseinrichtung (25) zur manuellen Betätigung des Betätigungsorgans (23) und/oder einen motorischen Löseantrieb zur Betätigung des Betätigungsorgans (23) aufweist.

14. Anhängekupplung nach einem der vorhergehenden Ansprüche, **dadurch gekennzeichnet, dass** der Verriegelungskörper (38) und/oder das Entsperr-Betätigungsglied (54) und/oder der Sperrkörper (64) linear beweglich (64) gelagert sind und/oder dass der Verriegelungskörper (38) und der Sperrkörper (64) zueinander winkelig, insbesondere im wesentlichen senkrecht zueinander, gelagert sind.

## Claims

1. Trailer coupling with a coupling arm (15) for the coupling of a trailer (11), and a holder (13) attachable to a motor vehicle (12), in particular a car, for holding the coupling arm (15), with a locking device (22) which has a locking body (38) spring-loaded by a spring assembly (50) in a locking position (V) for locking and immovable fixing of the coupling arm (15) to the holder (13), wherein the locking body (38) is adjustable by means of an unlocking operation with an actuating organ (23) from the locking position (V) into an unlocked position (E) in which the coupling arm (15) is movable relative to the holder (13), wherein the locking device (22) has a blocking body (64) adjustable between a release position (F) and a blocked position (S), for blocking any movement of the locking body (38) from the locking position (V) into the unlocked position (E), wherein the locking device (22) has an unlocking actuating member (54) actuable by the actuating organ (23) for actuating the blocking body (64) from its blocked position (S) into its release position (F) in which the blocking body (64) is moved outwards to the side away from the locking body (38), and wherein the locking device (22) has a coupling arrangement (55) for coupling the locking body (38) and the unlocking actuating member (54) to the actuating organ (23), so that in an unlocking operation of the actuating organ (23), firstly the unlocking actuating member (54) moves the blocking body (64) into its release position (F), and then the actuating organ (23) moves the locking body (38) in the direction of the unlocked position (E), **characterised in that** the unlocking actuating member (54) has a transmission face to transmit an actuating force of the spring assembly (50) to the locking body (38) in the direction of its locking position (V).

2. Trailer coupling according to claim 1, **characterised in that** the blocking body (64) is spring-loaded in the blocked position (S), in particular directly by means of a spring assembly (67), wherein advantageously the spring assembly (50) biasing the locking body (38) in the locking position (V) and the spring assembly (67) biasing the blocking body (64) in the blocked position (S) have directions of action at an angle to one another, expediently substantially at a right-angle.

3. Trailer coupling according to claim 1 or 2, **characterised in that** that the coupling arrangement (55) couples the locking body (38) to the unlocking actuating member (54) in the direction of actuation, in particular in the direction of pulling (73), of the actuating organ (23) with a clearance between the locking body (38) and the unlocking actuating member (54), wherein the coupling arrangement (55) expediently has a tension rod (79) with a retaining socket, in which a holding member, in particular a lateral pin, is held with play relative to a direction of pulling (73).

4. Trailer coupling according to any of the preceding claims, **characterised in that** the coupling arrangement (55) is located in an internal space (85) of the locking body (38) and/or in an internal space of the unlocking actuating member (54) and/or that the locking body (38) and the unlocking actuating member (54) are coaxial, in particular in a direction of pulling (73) of the actuating organ (23).

5. Trailer coupling according to any of the preceding claims, **characterised in that** the unlocking actuating member (54) is mounted between the locking body (38) and the spring assembly (50).

6. Trailer coupling according to any of the preceding claims, **characterised in that** the unlocking actuating member (54) and the blocking body (64) are coupled via a wedge mechanism (72) in order to actuate the blocking body (64) into the release position (F).

7. Trailer coupling according to claim 6, **characterised in that** the wedge mechanism (72) has an inclined surface (75) on the blocking body (64), which runs next to a blocking stop face (71) for blocking the locking body (38), in particular between blocking stop faces (71), wherein the inclined surface (75) expediently has a steeper inclination away from the locking body (38) than the blocking stop face (71).

8. Trailer coupling according to any of the preceding claims, **characterised in that** the coupling arm (15) may be affixed to the holder (13) or that the coupling arm (15) is mounted on the holder (13) with the ability to rotate or slide.

9. Trailer coupling according to claim 8, **characterised in that** the locking device (22) is mounted, completely or at least partly protected, in an internal space (36) of the holder (13) and/or an internal space (36) of a bearing assembly (17) movably supporting the coupling arm (15) on the holder (13) and/or that for locking and fixing the coupling arm (15) on the holder (13), form-fitting contours (31, 32) are provided on the holder (13) and on an arm bearing section (18) of the coupling arm (15) mounted movably on the holder (13), and the locking device (22) for adjusting the form-fitting contours (31, 32) to one another, in particular for shifting the form-fitting contours (32) of the arm bearing section (18) towards the holder (13), is so designed that the form-fitting contours (31, 32) in the locking position (V) engage positively in one another, and in the unlocked position (E) are removed from one another and allow movement of the coupling arm (15).

10. Trailer coupling according to any of the preceding claims, **characterised in that** the locking device (22) has at least one movably mounted locking element (56) which, by means of the locking body (38), which forms in particular a displacer body (40), may be shifted into a locking position (V) to lock the coupling arm (15) to the holder (13).

11. Trailer coupling according to any of claims 8 to 10, **characterised in that** the coupling arm (15) is movably mounted on the holder (13) via a hollow shaft bearing assembly (17), in which a bearing section (18) is mounted movably, in particular able to slide and/or rotate, on a hollow shaft (37), that the locking body (38) is accommodated movably in an internal space (36) of the hollow shaft (37), that the locking element or elements (56) is or are movably mounted in a guide channel of the hollow shaft (37) between the internal space (36) and an outer surface (58) of the hollow shaft (37), and that the locking body (38) in the locking position (V) drives the locking element or elements (56) outwards through the guide channel, so that the locking element or elements (56) protrude in part beyond the outer surface (58) and act against the bearing section (18).

12. Trailer coupling according to claim 11, **characterised in that** the locking element or elements (56) protruding in part beyond the bearing face adjusts/adjust the bearing section (18) at the hollow shaft (37), so that at least one form-fitting contour (31, 32) permanently joined to the bearing section (18) engages with positive locking in a form-fitting contour (31, 32) permanently joined to the hollow shaft (37), and/or that the hollow shaft (37) with the holder (13) and the bearing section (18) with the coupling arm (15) are connected or are single-piece components.

13. Trailer coupling according to any of the preceding claims, **characterised in that** the actuating organ (23) is a towing organ (24) for a towing operation and/or that the actuating organ (23) is flexible at least in sections, and in particular comprises a wire rope or a control cable (28), and/or has a manual actuation device (25) for manual actuation of the actuating organ (23) and/or a powered release drive to actuate the actuating organ (23).

14. Trailer coupling according to any of the preceding claims, **characterised in that** the locking body (38) and/or the unlocking actuating member (54) and/or the blocking body (64) are mounted with linear movement facility and/or that the locking body (38) and the blocking body (64) are mounted at an angle to one another, in particular substantially at right-angles to one another.

## Revendications

1. Attelage comprenant un bras d'attelage (15) servant à atteler une remorque (11) et un support (13) pouvant être fixé au niveau d'un véhicule à moteur (12), en particulier au niveau d'une voiture particulière, et servant à supporter le bras d'attelage (15), comprenant un dispositif de verrouillage (22), qui présente un corps de verrouillage (38) soumis à l'action d'un ensemble de ressorts (50) dans une position de verrouillage (V) et servant à verrouiller et à fixer de manière immobile le bras d'attelage (15) au niveau du support (13), sachant que le corps de verrouillage (38) peut être déplacé par un actionnement de déverrouillage à l'aide d'un organe d'actionnement (23) depuis la position de verrouillage (V) dans une position de déverrouillage (E), dans laquelle le bras d'attelage (15) est mobile par rapport au support (13), sachant que le dispositif de verrouillage (22) présente un corps de blocage (64) pouvant être déplacé entre une position de libération (F) et une position de blocage (S), servant à bloquer un mouvement du corps. de verrouillage (38) depuis la position de verrouillage (V) dans la position de déverrouillage (E), sachant que le dispositif de verrouillage (22) présente un organe d'actionnement de déblocage (54) pouvant être actionné à l'aide de l'organe d'actionnement (23), servant à actionner le corps de blocage (64) depuis sa position de blocage (S) dans sa position de libération (F), dans laquelle le corps de blocage (64) est déplacé de manière à s'éloigner du corps de verrouillage (38) à l'extérieur sur le côté, et sachant que le dispositif de verrouillage (22) présente un ensemble de couplage (55) servant à coupler le corps de verrouillage (38) et l'organe d'actionnement de déblocage (54) à l'organe d'actionnement (23) de sorte que lors d'un actionnement de déverrouillage de l'organe d'actionnement (23), l'organe d'actionnement de déblocage (54) déplace en premier lieu le corps de blocage (64) dans sa position de libération (F), puis l'organe d'actionnement (23) déplace le corps de verrouillage (38) en direction de la position de déverrouillage (E), **caractérisé en ce que** l'organe d'actionnement de déblocage (54) présente une surface de transmission servant à transmettre une force de réglage de l'ensemble de ressorts (50) sur le corps de verrouillage (38) en direction de sa position de verrouillage (V).

2. Attelage selon la revendication 1, **caractérisé en ce que** le corps de blocage (64) est soumis à l'effet d'un ressort dans la position de blocage (S), en particulier directement par un ensemble de ressorts (67), sachant que de manière avantageuse l'ensemble de ressorts (50) sollicitant le corps de verrouillage (38) dans la position de verrouillage (V) et l'ensemble de ressorts (67) sollicitant le corps de blocage (64) dans la position de blocage (S) présentent des directions effectives inclinées les unes par rapport aux autres, de manière appropriée essentiellement perpendiculaires.

3. Attelage selon la revendication 1 ou 2, **caractérisé en ce que** l'ensemble de couplage (55) couple le corps de verrouillage (38) à l'organe d'actionnement de déverrouillage (54) dans la direction d'actionnement, en particulier dans la direction de traction (73), de l'organe d'actionnement (23) à l'aide d'un passage libre entre le corps de verrouillage (38) et l'organe d'actionnement de déblocage (54), sachant que l'ensemble de couplage (55) présente de manière appropriée un tirant d'ancrage (79) doté d'un logement de retenue, lequel accueille avec du jeu par rapport à la direction de traction (73), un organe de retenue, en particulier un boulon transversal.

4. Attelage selon l'une quelconque des revendications précédentes, **caractérisé en ce que** l'ensemble de couplage (55) est disposé dans un espace intérieur (85) du corps de verrouillage (38) et/ou dans un espace intérieur de l'organe d'actionnement de déblocage (54), et/ou **en ce que** le corps de verrouillage (38) et l'organe d'actionnement de déblocage (54) sont coaxiaux, en particulier dans une direction de traction (73) de l'organe d'actionnement (23).

5. Attelage selon l'une quelconque des revendications précédentes, **caractérisé en ce que** l'organe d'actionnement de déblocage (54) est disposé entre le corps de verrouillage (38) et l'ensemble de ressorts (50).

6. Attelage selon l'une quelconque des revendications précédentes, **caractérisé en ce que** l'organe d'actionnement de déblocage (54) et le corps de blocage (64) sont couplés aux fins de l'actionnement du corps de blocage (64) dans la position de libération (F) par l'intermédiaire d'un mécanisme à clavette (72).

7. Attelage selon la revendication 6, **caractérisé en ce que** le mécanisme à clavette (72) présente une surface oblique (75) au niveau du corps de blocage (64), laquelle s'étend à côté d'une surface de butée de blocage (71) servant à bloquer le corps de verrouillage (38), en particulier entre des surfaces de butée de blocage (71), sachant que la surface oblique (75) présente de manière avantageuse une inclinaison plus importante en s'éloignant du corps de verrouillage (38) que la surface de butée de blocage (71).

8. Attelage selon l'une quelconque des revendications précédentes, **caractérisé en ce que** le bras d'attelage (15) peut être enfiché au niveau du support (13), ou **en ce que** le bras d'attelage (15) est logé de manière à pouvoir tourner et/ou de manière à pouvoir coulisser au niveau du support (13).

9. Attelage selon la revendication 8, **caractérisé en ce que** le dispositif de verrouillage (22) est disposé de manière complètement ou au moins en partie protégée dans un espace intérieur (36) du support (13) et/ou dans un espace intérieur (36) d'un ensemble formant palier (17) logeant de manière mobile le bras d'attelage (15) au niveau du support (13), et/ou **en ce qu'**aux fins du verrouillage et de la fixation du bras d'attelage (15) au niveau du support (13), des contours de complémentarité de forme (31, 32) sont disposés au niveau du support (13) et d'une partie formant palier du bras (18), logée de manière mobile au niveau du support (13), du bras d'attelage (15), et **en ce que** le dispositif de verrouillage (22) servant à déplacer les contours de complémentarité de forme (31, 32) les uns par rapport aux autres, en particulier servant à déplacer les contours de complémentarité de forme (32) de la partie formant palier du bras (18) en direction du support (13), est configuré de telle manière que les contours de complémentarité de forme (31, 32) viennent en prise les uns avec les autres par complémentarité de forme dans la position de verrouillage (V) et sont éloignés les uns des autres dans la position de déverrouillage (E) autorisant un mouvement du bras d'attelage (15).

10. Attelage selon l'une quelconque des revendications précédentes, **caractérisé en ce que** le dispositif de verrouillage (22) présente au moins un élément de verrouillage (56) logé de manière mobile, lequel peut être déplacé par le corps de verrouillage (38), lequel constitue en particulier un corps de refoulement (40), dans une position de verrouillage (V) aux fins du verrouillage du bras d'attelage (15) au niveau du support (13).

11. Attelage selon l'une quelconque des revendications 8 à 10, **caractérisé en ce que** le bras d'attelage (15) est logé de manière mobile au niveau du support (13) au-dessus d'un ensemble formant palier d'arbres creux (17), dans le cadre duquel une partie formant palier (18) est logée de manière mobile sur un arbre creux (37), en particulier de manière mobile par glissement et/ou de manière mobile par rotation, **en ce que** l'espace intérieur (36) de l'arbre creux (37) accueille de manière mobile le corps de verrouillage (38), **en ce que** l'élément de verrouillage (56) au moins au nombre de un est logé de manière mobile dans un canal de guidage de l'arbre creux (37) entre l'espace intérieur (36) et une surface extérieure (58) de l'arbre creux (37), et **en ce que** le corps de verrouillage (38) refoule dans la position de verrouillage (V) l'élément de verrouillage (56) au moins au nombre de un par le canal de guidage vers l'extérieur de sorte que l'élément de verrouillage (56) au moins au nombre de un fait saillie en partie de la surface extérieure (58) et agit à l'encontre de la partie formant palier (18).

12. Attelage selon la revendication 11, **caractérisé en ce que** l'élément de verrouillage (56) au moins au nombre de un faisant saillie en partie de la surface de palier déplace la partie formant palier (18) au niveau de l'arbre creux (37) de sorte qu'au moins un contour de complémentarité de forme (31, 32) relié de manière fixe à la partie formant palier (18) vient en prise en opérant un verrouillage par complémentarité de forme avec un contour de complémentarité de forme (31, 32) relié de manière fixe à l'arbre creux (37), et/ou **en ce que** l'arbre creux (37) est relié au support (13) et la partie formant palier (18) est reliée au bras d'attelage (15) ou ces derniers constituent des éléments d'un seul tenant.

13. Attelage selon l'une quelconque des revendications précédentes, **caractérisé en ce que** l'organe d'actionnement (23) est un organe de traction (24) pour un actionnement de traction, et/ou **en ce que** l'organe d'actionnement (23) est au moins par endroits flexible, et comprend en particulier un câble de transmission ou un câble Bowden (28), et/ou **en ce que** l'attelage présente un dispositif d'actionnement manuel (25) servant à l'actionnement manuel de l'organe d'actionnement (23) et/ou un entraînement de déclenchement motorisé servant à l'actionnement de l'organe d'actionnement (23).

14. Attelage selon l'une quelconque des revendications précédentes, **caractérisé en ce que** le corps de verrouillage (38) et/ou l'organe d'actionnement de déblocage (54) et/ou le corps de blocage (64) sont logés de manière mobile linéairement, et/ou **en ce que** le corps de verrouillage (38) et le corps de blocage (64) sont logés de manière inclinée l'un par rapport à l'autre, en particulier essentiellement de manière perpendiculaire l'un par rapport à l'autre.
